# EUROPEAN PATENT APPLICATION

(11) **EP 1 876 052 A2**
(43) Date of publication of application: **09.01.2008**
(21) Application number: 07012997.8
(22) Date of filing: 03.07.2007
(51) Int. Cl.: B60L 15/38

(54) **Electric motor car drive control apparatus**

(30) Priority: 05.07.2006 JP 2006185555
(71) Applicant: Kabushiki Kaisha Toshiba, Minato-ku, Tokyo 105-8001 (JP)
(72) Inventor: Toda, Shinichi, Tokyo (JP); Yasuoka, Ikuo, Tokyo (JP); Nakazawa, Yosuke, Tokyo (JP)
(74) Representative: HOFFMANN EITLE

(57) **Abstract**

To provide an electric motor car drive control apparatus enabling, in a train drive system having permanent magnetic synchronous motors employed as drive motors, such a configuration that allows a similar control to a centralized control like the case of induction motors, allowing for a reduced cost and a minimized installation size of the system, a plurality of permanent magnetic synchronous motors 17 to 20 are provided as car drive motors, a plurality of VVVF inverters 9 to 12 are adapted to drive the plurality of permanent magnetic synchronous motors individually in a one-to-one corresponding manner, the plurality of VVVF inverters being grouped into a plurality of control units each respectively composed0 of two or more VVVF inverters, and a plurality of gate controllers 22 and 23 are provided one for each control unit.

## Description

### BACKGROUND OF THE INVENTION

### 1. Field of Art

The present invention relates to an electric motor car drive control apparatus for controlling a train drive system, which drives a locomotive or a motor railcar, including a plurality of permanent magnet synchronous motors (referred in the drawings to "PMSM") each respectively configured as a drive motor, and a plurality of VVVF (variable voltage variable frequency: referred in the drawings to "VVVF") inverters each respectively adapted for an individual driving of a corresponding permanent magnet synchronous motor.

### 2. Description of Relevant Art

According to a relevant art employing induction motors (referred in the drawings to "IM") as drive motors, two or four induction motors are connected in parallel as a control unit to be controlled with a single VVVF inverter. Accordingly, if any induction motor fails, whole induction motors in the control unit where the failing induction motor belongs are opened together with an associated inverter.

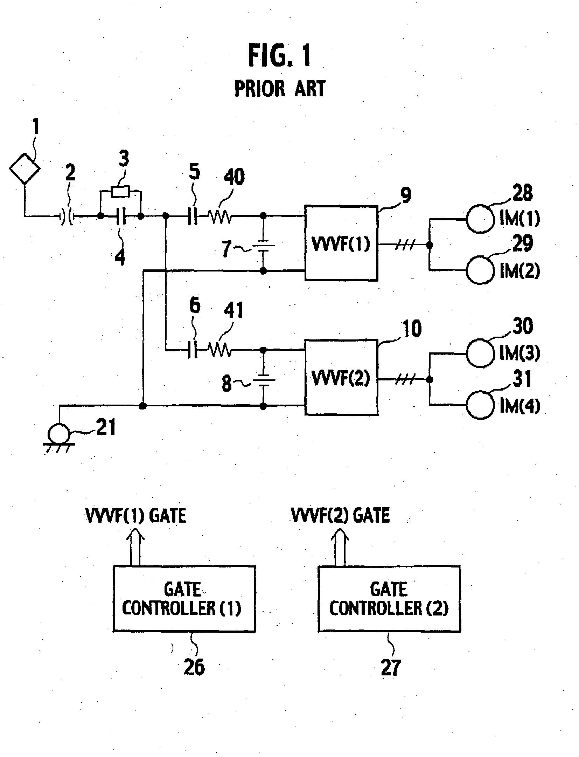

Fig. 1 shows an electric motor car drive control apparatus according to a relevant art, which includes: a supply line composed of a pantograph 1, a high-speed circuit breaker 2, a charge resistor 3, and a charge resistor short-circuiting contactor 4, and configured to take in electricity from an external dc (direct current) power source; a ground line, with wheels 21 inclusive; two inverter circuits composed of opening contactors 5 and 6, filter reactors 40 and 41, filter capacitors 7 and 8, and VVVF inverters 9 and 10, respectively, and connected in parallel between the supply line and the ground line; two sets of induction motors 28, 29 and 30, 31 to be concurrently driven by the VVVF inverters 9 and 10, respectively; and two gate controllers 26 and 27 adapted for gate control of the VVVF inverters 9 and 10, respectively.

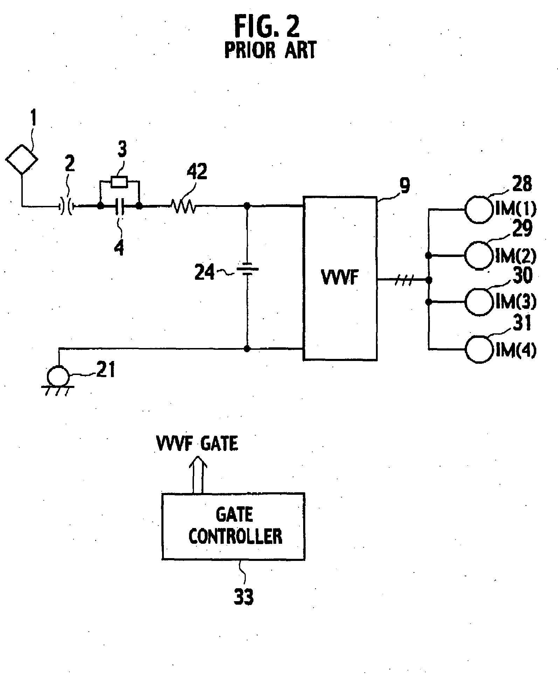

Fig. 2 shows an electric motor car drive control apparatus according to another relevant art, which includes: a supply line composed of a pantograph 1, a high-speed circuit breaker 2, a charge resistor 3, and a charge resistor short-circuiting contactor 4, and configured to take in electricity from an external dc power source: a ground line, with wheels 21 inclusive; a single inverter circuit composed of a filter reactor 42 connected to the supply line, and a combination of a filter capacitor 24 and a VVVF inverter 9 connected in parallel between the filter reactor 42 and the ground line; a set of four induction motors 28, 29, 30, and 31 to be concurrently driven by the VVVF inverter 9; and a gate controller 33 adapted for gate control of the VVVF inverter 9.

The induction motors 28, 29, 30, and 31 are now referred to IM(1), IM(2), IM(3), and IM(4), respectively, for better understanding. In Fig. 1 the induction motors IM(1), IM(2), IM(3), and IM(4) are arranged for a truck control by a control unit of two motors. In Fig. 2, the induction motors IM(1), IM(2), IM(3), and IM(4) are arranged for a centralized control by a control unit of four motors.

As shown in Japanese Patent Application Laid-Open Publication No. 2005-328619 (Japanese Patent Application No. 2004-143577), synchronous motors using permanent magnets may be employed as drive motors. In such a case, each permanent magnet synchronous motor needs a control with a voltage supplied from a VVVF inverter in accordance with a rotation of the rotor, and it is required to provide a single dedicated VVVF inverter per one motor, to implement a so-called individual control. In this individual control, if any motor fails, the opening is to be made by a unit of truck, allowing for a so-called individual opening.

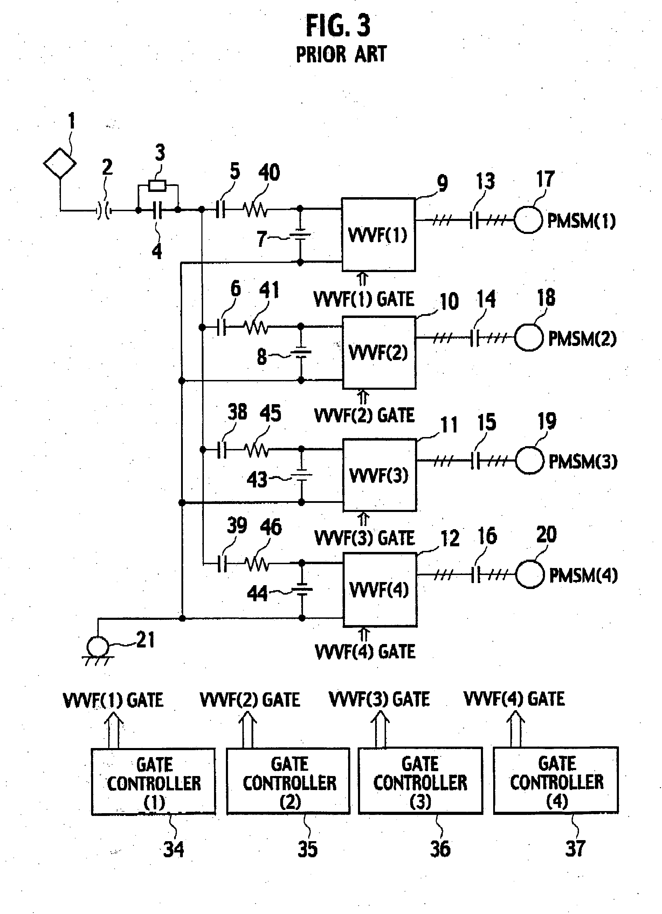

There is thus needed a configuration for the so-called individual control, where opening contactors for VVVF inverters, as well as gate controllers for gate control of the inverters, should be identical in number to the motors to be controlled, as shown in Fig. 3.

Fig. 3 shows an electric motor car drive control apparatus in a train drive system having permanent magnetic synchronous motors as drive motors according to another relevant art . This electric motor car drive control apparatus includes: a supply line composed of a pantograph 1, a high-speed circuit breaker 2, a charge resistor 3, and a charge resistor short-circuiting contactor 4, and configured to take in electricity from an external dc power source; a ground line, with wheels 21 inclusive: four inverter circuits composed of opening contactors 5, 6, 38, and 39, filter reactors 40, 41, 45, and 46, filter capacitors 7, 8, 43, and 44, and VVVF inverters 9, 10, 11, and 12, respectively, and connected in parallel between the supply line and the ground line; four permanent magnetic synchronous motors 17, 18, 19, and 20 connected through three-phase load contactors 13, 14, 15, and 16 to ac (alternating current) ends of the VVVF inverters 9, 10, 11, and 12, respectively, to be driven by the VVVF inverters 9, 10, 11, and 12, respectively; and four gate controllers 34, 35, 36, and 37 adapted for individual gate control of the VVVF inverters 9. 10, 11, and 12, respectively.

Such being the case, in a train drive system having permanent magnetic synchronous motors employed as drive motors according to a relevant art, a configuration for individual control is needed, requiring opening contactors for VVVF inverters, as well as gate controllers for gate control of the inverters, to be identical in number to the motors, with an increased cost and an enlarged installation size, as a problem.

### SUMMARY OF INVENTION

The present invention has been devised in view of such points in the relevant art. It therefore is an object of the present invention to provide an electric motor car drive control apparatus enabling, in a train drive system having permanent magnetic synchronous motors employed as drive motors, such a configuration that allows, upon a failure of any motor, a similar control to a centralized control like the case of induction motors , unless an individual opening is required for each motor, thus allowing for a reduced cost and a minimized installation size of the system.

An aspect of the present invention is an electric motor car drive control apparatus which includes a plurality of permanent magnetic synchronous motors provided as car drive motors, a plurality of VVVF inverters adapted to drive the plurality of permanent magnetic synchronous motors in a one-to-one corresponding manner, the plurality of VVVF inverters being grouped into a plurality of control units each respectively composed of two or more VVVF inverters, and a plurality of gate controllers provided one for each control unit.

According to the electric motor car drive control apparatus of this invention, the plurality of permanent magnetic synchronous motors can be individually controlled by the plurality of VVVF inverters, respectively, and twos or mores of the plurality of WVF inverters can be each controlled concurrently by a single gate controller, so that a simple provision of gate controllers identical in number to a fraction of division by the number of VVVF inverters of the control unit can do well, without needing an equivalent number of gate controllers to the plurality of VVVF inverters, thus allowing for a decreased cost and a minimized installation size of the system.

### BRIEF DESCRIPTION OF DRAWINGS

Fig. 1 is a block diagram of an electric motor car drive control apparatus configured for a truck control of induction motors according to a relevant art.
Fig. 2 is a block diagram of an electric motor car drive control apparatus configured for a centralized control of induction motors according to another relevant art.
Fig. 31s a block diagram of an electric motor car drive control apparatus of an electric motor car drive system configured with permanent magnet synchronous motors according to another relevant art.

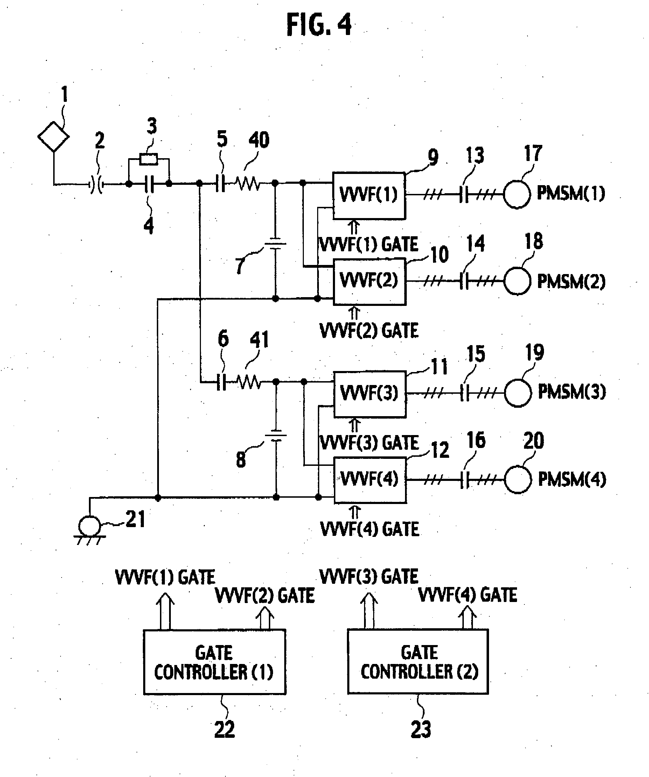

Fig. 4 is a block diagram of an electric motor car drive control apparatus according to a first embodiment of the present invention.

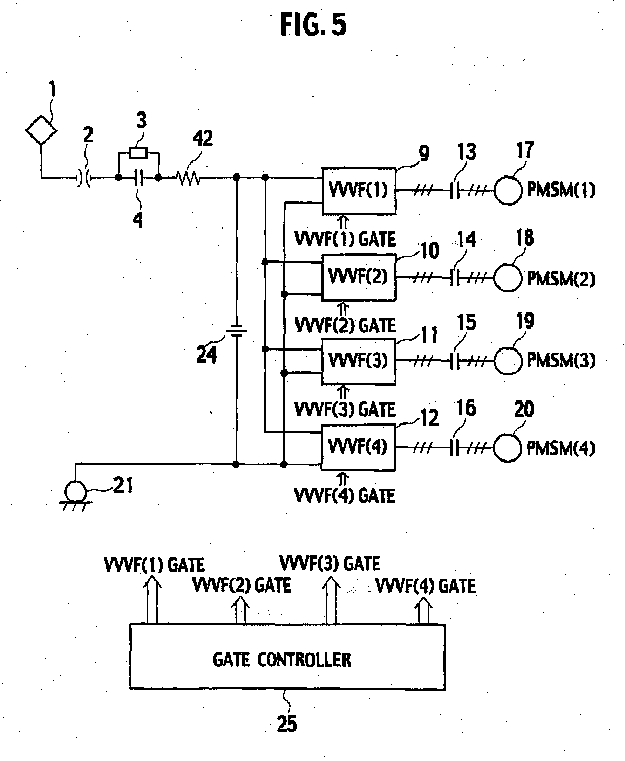

Fig. 5 is a block diagram of an electric motor car drive control apparatus according to a second embodiment of the present invention.

### DETAILED DESCRIPTION OF THE PREFERRED EMBODIMENTS

There will be described below the preferred embodiments of the present invention into details with reference to the accompanying drawings. Like members or elements will be designated by like reference characters.

### (First Embodiment)

Fig. 4 shows configuration of an electric motor car drive control apparatus according to the first embodiment of the present invention. In this embodiment, the electric motor car drive control apparatus includes: a supply line composed of a pantograph 1. a high-speed circuit breaker 2, a charge resistor 3, and a charge resistor short-circuiting contactor 4, and configured to take in electricity from an external dc power source; a ground line, with wheels 21 inclusive; two inverter circuits composed of opening contactors 5 and 6, filter reactors 40 and 41, filter capacitors 7 and 8, and two sets of VVVF inverters 9, 10 and 11, 12, respectively, and connected in parallel between the supply line and the ground line; four permanent magnetic synchronous motors 17, 18, 19, and 20 connected through three-phase load contactors 13, 14, 15, and 16 to ac ends of the VVVF inverters 9, 10, 11, and 12, respectively, to be driven by the VVVF inverters 9, 10, 11, and 12, respectively; and two gate controllers 22 and 23 adapted for gate control of the VVVF inverters 9, 10, 11, and 12, by a control unit of two inverters in a set. The gate controllers 22 and 23 , filter capacitors 7 and 8, and combinations of opening contactors 5 and 6 and filter reactors 40 and 41 are common to the sets of VVVF inverters 9, 10 and 11, 12, respectively. It is noted that the gate controllers 22 and 23 have their CPU's (central processing units) adapted for individual control of the sets of VVVF inverters 9, 10 and 11, 12, respectively.

In the above-noted electric motor car drive control apparatus, the gate controller 22 is configured to control both of gates of the set of VVVF inverters 9, 10. In the event of a failure of either inverter , e.g. VVVF inverter 9, of one control unit, the gate controller 22 works to open the opening contactor 5 associated with that control unit, thereby stopping two VVVF inverters 9, 10 constituting the control unit, while opening both the permanent magnetic synchronous motors 17, 18. In other words, the electric motor car drive control apparatus according to this embodiment is adapted for a control to implement a sort of truck opening.

According to the present embodiment, it is possible to reduce the number of gate controllers, as well as that of opening contactors, to a fraction of division by the number thereof in the control unit, i.e., one half, with respect to that of an electric motor car drive control apparatus employing permanent magnetic synchronous motors according to a relevant art, thus enabling, even for a synchronous motor using permanent magnets, a principal circuit configuration more like to the truck control of induction motors, allowing for a reduced cost and a minimized installation size.

It is noted that in the present embodiment the gate controllers 22 and 23 have CPU' s employed therefor, which are each able to control a plurality of motors, and adapted in a wheel slip and skid control to achieve a fast recognition of speeds of the four motors, allowing for implementation of a high-speed slip and skid control by an instantaneous detection of speed differences between those motors.

### (Second Embodiment)

Fig. 5 shows configuration of an electric motor car drive control apparatus according to the second embodiment of the present invention. In this embodiment, the electric motor car drive control apparatus includes: a supply line composed of a pantograph 1, a high-speed circuit breaker 2, a charge resistor 3, and a charge resistor short-circuiting contactor 4, and configured to take in electricity from an external dc power source; a ground line, with wheels 21 inclusive; a single inverter circuit composed of a single filter reactor 42 connected to the supply line, and a combination of a single filter capacitor 24 and four VVVF inverters 9, 10, 11, and 12 connected in parallel between the filter reactor 42 and the ground line; four permanent magnetic synchronous motors 17, 18, 19, and 20 connected through three-phase load contactors 13, 14, 15 , and 16 to ac ends of the VVVF inverters 9, 10, 11, and 12, respectively, to be driven by the VVVF inverters 9, 10; 11, and 12, respectively; and a single gate controller 25 adapted for gate control of the VVVF inverters 9, 10, 11, and 12, by a control unit of four inverters in a set. Namely, the gate controller 25 and the filter capacitor 24 are common to the four VVVF inverters 9 to 12. In this embodiment also, the pantograph 1, high-speed circuit breaker 2, charge resistor 3, and charge resistor short-circuiting contactor 4 are common to the four VVVF inverters 9 to 12, and in this embodiment, also the filter reactor 42 is common. There is no common opening contactor shown in the embodiment of Fig. 5.

In the present embodiment, the single gate controller 25 is configured with an incorporated CPU, which is adapted for an individual control of the four VVVF inverters 9 to 12.

In the electric motor car drive control apparatus according to this embodiment, the single gate controller 25 is configured to control the gate of a respective one of four VWF inverters 9 to 12 in the control unit. In this case, if any VVVF inverter in the control unit, e.g. the VWF inverter 9, fails, this is followed by control actions to open the whole system in which no opening contactor is provided. In other words, in this embodiment, the electric motor car drive control apparatus is adapted to implement a sort of centralized control.

According to this embodiment of electric motor car drive control apparatus, it is possible to reduce the number of gate controllers to a quarter of that in a relevant art, thus enabling, even for a synchronous motor using permanent magnets, a main circuit configuration more like to the centralized control of induction motors, allowing for a reduced cost and a minimized installation size.

While preferred embodiments of the present invention have been described using specific terms, such description is for illustrative purposes, and it is to be understood that changes and variations may be made without departing from the scope of the following claims.

## Claims

1. An electric motor car drive control apparatus comprising:
a plurality of permanent magnetic synchronous motors provided as car drive motors;
a plurality of VVVF inverters adapted to drive the plurality of permanent magnetic synchronous motors individually in a one-to-one corresponding manner, the plurality of VVVF inverters being grouped into a plurality of control units each respectively composed of two or more VVVF inverters; and
a plurality of gate controllers provided one for each control unit.

2. The electric motor car drive control apparatus as claimed in claim 1, further comprising a plurality of inverter opening contactors provided one for each control unit of VVVF inverters, and each respectively adapted for a concurrent opening from power supply of a corresponding control unit of VVVF inverters.

3. The electric motor car drive control apparatus as claimed in claim 1, wherein the plurality of VVVF inverters are grouped into a plurality of control units each respectively composed of two VVVF inverters.

4. The electric motor car drive control apparatus as claimed in claim 1, wherein the plurality of WVF inverters are grouped into a plurality of control units each respectively composed of four VVVF inverters.
